# EUROPEAN PATENT SPECIFICATION

(11) **EP 2 390 460 B1**
(45) Date of publication and mention of the grant of the patent: **28.12.2016**
(21) Application number: 10166268.2
(22) Date of filing: 17.06.2010
(51) Int. Cl.: E21B 33/035, H01R 13/707

(54) **Extending the life of a compromised umbilical**
Verlängerung der Lebensdauer einer geschwächten Nabelschnur
Extension de la durée de vie d'un cordon ombilical fragilisé

(30) Priority: 27.05.2010 GB 201008816
(43) Date of publication of application: 30.11.2011
(73) Proprietor: GE Oil & Gas UK Limited, Nailsea Bristol BS48 1BS (GB)
(72) Inventor: Packham, Andrew, Chippenham, Wiltshire SN14 0HG (GB); Smart, Hilton, Brislington, Bristol BS4 3QP (GB)
(74) Representative: Lee, Brenda

(56) References cited:
- EP-A1- 1 316 672
- WO-A1-2007/086722
- US-A1- 2009 296 428

## Description

### Field of the Invention

The present invention relates to extending the life of a compromised umbilical.

### Background of the Invention

One of the most common problems with a subsea umbilical between a fluid extraction well surface platform and a well complex is degradation of the impedance of insulation between internal conductors of the umbilical and between the internal conductors and earth, i.e. the surrounding sea water. In practice, such an umbilical is compromised by the ingress of sea water, causing the capacitance between the conductors and/or between the conductors and earth to increase substantially, with resultant increase of leakage currents and less power available for the well complex. This invention enables a solution to this problem by saving the need to replace the umbilical.

Various systems for providing electrical power to an underwater location are described in: GB-A-2 332 220; GB-A-2 382 600; WO01/84689; WO02/37640; US-A-5 444 184; US-A-4 646,083; US-A-4 636 934; WO01/71158; US-A-4 080 025; and US-A-6 045 333. WO 2007/086722 A1 discloses an electrical power transmission system comprising a host station a remote power conversion facility and an umbilical which is connected to an underwater system.

### Summary of the Invention

According to the present invention from one aspect, there is provided a method of using an umbilical between a surface location and an underwater location of an underwater fluid extraction well system, the umbilical carrying an electrical power conductor for transmitting to the underwater location electrical power from a source at the surface location at a first frequency, for use by underwater equipment of the well system, the method comprising the steps of:
detecting that the umbilical has been compromised by the ingress of water and, in response thereto:
   converting electrical power from the source to electrical power at a second frequency, lower than the first frequency, or to DC electrical power;
   transmitting said electrical power at the second frequency or said DC electrical power to the underwater location via the conductor; and
   at the underwater location, converting said electrical power at the second frequency or said DC electrical power to electrical power at a frequency used by the underwater equipment of the well system.

Typically, the frequency of electrical power used by underwater equipment of the well system is the same as the first frequency.

The umbilical could be, for example, connected to a distribution unit at the underwater location or a module at the underwater location before a distribution unit of the well system.

Typically, the underwater location is on the bed of a body of water surrounding the umbilical.

Said detecting step could include monitoring the voltage of electrical power from the umbilical for use in producing an indication that the umbilical has been compromised by the ingress of water if the voltage is less than a threshold.

Typically, the method includes the steps of:
if it is detected that the umbilical has been compromised by the ingress of water, providing means at the surface location for converting said electrical power from the source at the first frequency to said electrical power at the second frequency or to said DC electrical power; and
providing at the underwater location means for converting the electrical power at the second frequency or said DC electrical power to electrical power at said frequency used by underwater equipment of the well system.

Alternatively, the method could include the steps of:
if it is detected that the umbilical has been compromised by the ingress of water, causing first converting means, at the surface location, to convert said electrical power from the source at the first frequency to said electrical power at the second frequency or to said DC electrical power; and
causing second converting means, at the underwater location, to convert the electrical power at the second frequency or said DC electrical power to electrical power at said frequency used by underwater equipment of the well system.

According to the present invention from another aspect, there is provided an underwater fluid extraction well system, comprising:
a source of electrical power at a first frequency at a surface location;
an umbilical for transmitting electrical power from the source via an electrical conductor of the umbilical to an underwater location for use by underwater equipment of the well system; and
means for detecting that the umbilical has been compromised by the ingress of water, wherein the system further comprises:
   first converting means, for use at the surface location, for converting electrical power from the source to electrical power at a second frequency, lower than the first frequency, or to DC electrical power; and
   second converting means, for use at the underwater location, for converting such electrical power at the second frequency or said DC electrical power to electrical power at a frequency used by said underwater equipment of the well system, so that, if said detecting means indicates that the umbilical is compromised by the ingress of water, said first converting means can be used to convert electrical power from the source to said second frequency or to DC, for transmission via said conductor to the underwater location, and said second converting means can be used to convert the electrical power at the second frequency or the DC electrical power to electrical power at the frequency used by said underwater equipment of the system.

Said detecting means could comprise means for monitoring the voltage of electrical power from the umbilical for use in producing an indication that the umbilical is compromised by the ingress of water if the voltage is less than a threshold.

### Brief Description of the Drawings

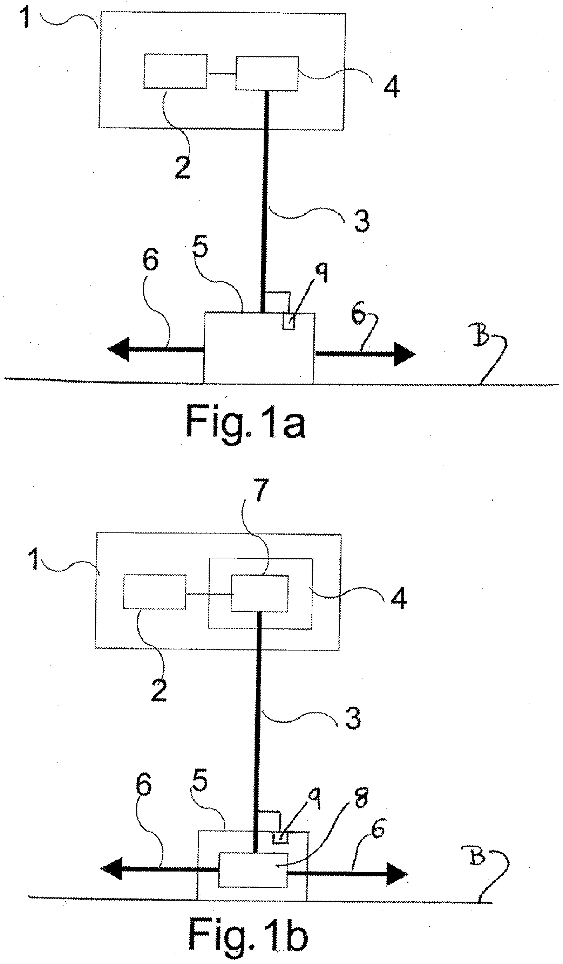

Fig. 1a shows schematically a typical existing arrangement using an umbilical; and
Fig. 1b shows schematically an arrangement using an embodiment of the invention.

### Description of Embodiments of the Invention

Referring first to Fig. 1a, this shows schematically a typical existing arrangement of a surface platform 1 with an AC electrical power source 2 (typically operating at 50 or 60 Hz) connecting to the power conductors within an umbilical 3 via an electrical power and control module (EPCM) 4. The seabed end of the umbilical 3 connects to a distribution assembly 5 on the seabed B, the assembly 5 feeding electrical power to a multiplicity of wells via power connections 6.

Referring to Fig. 1b, this shows schematically an arrangement operating according to an embodiment of the invention. In Fig. 1b, items which correspond with those in Fig. 1a have the same reference numerals as Fig. 1a. The umbilical 3 has been compromised by the ingress of sea water, causing the capacitance between its power conductors and/or between its power conductors and earth to increase substantially with resultant increase of leakage currents and less power available to the well complex.

An electronic converter 7 is installed in the EPCM 4 and receives AC electrical power from source 2 (typically at 50 or 60 Hz) and outputs electrical power at a lower frequency. A frequency of 16 2/3 Hz is a favoured choice as communications on power (COP) electrical power control equipment operating at this frequency is readily available as a result of this frequency being a standard for the railway industry. A possible alternative is for the converter 7 to be one which simply rectifies the AC input power to produce DC electrical power and thus feed this DC electrical power down the umbilical 3 instead of AC electrical power. Both lower frequency AC and DC will substantially overcome the initial problem with the increased capacitance of the insulation of the compromised umbilical 3.

At the seabed end of the umbilical 3, a second electronic converter 8 is installed in the distribution assembly 5 or, as a possible alternative, is housed in a module on the seabed B and connected to the end of the umbilical 3 before it reaches the distribution assembly 5. The actual location of the subsea converter 8 will depend on the existing installation configuration. The converter 8 receives electrical power at the lower frequency, or DC, and outputs electrical power at the original power supply frequency for use by underwater equipment of the well complex via power connections 6.

An example of how it had been determined that the umbilical 3 had become compromised by the ingress of sea water is as follows. Conventional monitoring equipment 9 at the underwater location, for example at the distribution assembly 5 (as shown) or a module before it, detected that the voltage of power from the power conductors in the umbilical 3 had dropped below a threshold, an indication to that effect sent to the platform 1 being an indication of sea water ingress. This is an indication, on the one hand, to install converter 7 in EPCM 4 and, on the other hand, to install converter 8 subsea, typically using a remotely operated vehicle (ROV).

Alternatively, the converters 7 and 8 could be pre-installed at the surface location and subsea respectively, and switched into operation in the EPCM 4 and in the distribution assembly 5 or module if the monitoring equipment 9 indicates that the voltage of power from the power conductors in the umbilical 3 drops below a threshold.

### Advantages of using the Invention

The present invention allows the problems of an umbilical which is failing due to water ingress to be substantially overcome, thus allowing a prolonged life for a well complex without having to replace the expensive umbilical.

## Claims

1. A method of using an umbilical (3) between a surface location and an underwater location of an underwater fluid extraction well system, the umbilical (3) carrying an electrical power conductor for transmitting to the underwater location electrical power from a source (2) at the surface location at a first frequency, for use by underwater equipment of the well system, the method **characterised by** the steps of:
detecting that the umbilical (3) has been compromised by the ingress of water and, in response thereto:
converting electrical power from the source (2) to electrical power at a second frequency, lower than the first frequency, or to DC electrical power;
transmitting said electrical power at the second frequency or said DC electrical power to the underwater location via the conductor; and
at the underwater location, converting said electrical power at the second frequency or said DC electrical power to electrical power at a frequency used by the underwater equipment of the well system.

2. A method according to claim 1, wherein the frequency of electrical power used by underwater equipment of the well system is the same as the first frequency.

3. A method according to claim 1 or 2, wherein the umbilical (3) is connected to a distribution unit (5) at the underwater location.

4. A method according to claim 1 or 2, wherein the umbilical (3) is connected to a module at the underwater location before a distribution unit (5) of the well system.

5. A method according to any preceding claim, wherein the underwater location is on the bed of a body of water surrounding the umbilical (3).

6. A method according to any preceding claim, wherein said detecting step includes monitoring the voltage of electrical power from the umbilical (3) for use in producing an indication that the umbilical (3) has been compromised by the ingress of water if the voltage is less than a threshold.

7. A method according to any preceding claim, which includes the steps of:
if it is detected that the umbilical (3) has been compromised by the ingress of water, providing means (7) at the surface location for converting said electrical power from the source (2) at the first frequency to said electrical power at the second frequency or to said DC electrical power; and
providing at the underwater location means (8) for converting the electrical power at the second frequency or said DC electrical power to electrical power at said frequency used by underwater equipment of the well system.

8. A method according to any of claims 1 to 6, which includes the steps of:
if it is detected that the umbilical (3) has been compromised by the ingress of water, causing first converting means (7), at the surface location, to convert said electrical power from the source (2) at the first frequency to said electrical power at the second frequency or to said DC electrical power; and
causing second converting means (8), at the underwater location, to convert the electrical power at the second frequency or said DC electrical power to electrical power at said frequency used by underwater equipment of the well system.

9. An underwater fluid extraction well system, comprising:
a source (2) of electrical power at a first frequency at a surface location;
an umbilical (3) for transmitting electrical power from the source (2) via an electrical conductor of the umbilical (3) to an underwater location for use by underwater equipment of the well system; and
**characterised by** means (9) for detecting that the umbilical (3) has been compromised by the ingress of water, wherein the system further comprises:
first converting means (7), for use at the surface location, for converting electrical power from the source (2) to electrical power at a second frequency, lower than the first frequency, or to DC electrical power; and
second converting means (8), for use at the underwater location, for converting such electrical power at the second frequency or said DC electrical power to electrical power at a frequency used by said underwater equipment of the well system, so that, if said detecting means (9) indicates that the umbilical (3) is compromised by the ingress of water, said first converting means (7) can be used to convert electrical power from the source (2) to said second frequency or to DC, for transmission via said conductor to the underwater location, and said second converting means (8) can be used to convert the electrical power at the second frequency or the DC electrical power to electrical power at the frequency used by said underwater equipment of the system.

10. A system according to claim 9, wherein said detecting means (9) comprises means for monitoring the voltage of electrical power from the umbilical (3) for use in producing an indication that the umbilical is compromised by the ingress of water if the voltage is less than a threshold.

## Patentansprüche

1. Verfahren zur Verwendung eines Versorgungskabels (3) zwischen einem Ort an der Oberfläche und einem Ort unter Wasser eines Fluidextraktionsquellensystems, wobei das Versorgungskabel (3) einen elektrischen Energieleiter trägt, zum Senden, an den Ort unter Wasser, von elektrischer Energie von einer Quelle (2) an dem Ort an der Oberfläche mit einer ersten Frequenz, zur Verwendung durch Unterwasserausrüstung des Quellensystems, wobei das Verfahren durch die Schritte gekennzeichnet ist:
Detektieren, dass das Versorgungskabel (3) durch das Eindringen von Wasser beeinträchtigt wurde, und ansprechend darauf:
Umwandeln der elektrischen Energie von der Quelle (2) in elektrische Energie mit einer zweiten Frequenz, die niedriger ist als die erste Frequenz, oder in elektrische GS-Energie;
Senden der elektrischen Energie mit der zweiten Frequenz oder der elektrischen GS-Energie an den Ort unter Wasser über den Leiter; und
an dem Ort unter Wasser, Umwandeln der elektrischen Energie mit der zweiten Frequenz oder der elektrischen GS-Energie in elektrische Energie mit einer Frequenz, die von der Unterwasserausrüstung des Quellensystems verwendet wird.

2. Verfahren nach Anspruch 1, wobei die Frequenz der elektrischen Energie, die von der Unterwasserausrüstung des Quellensystems verwendet wird, gleich ist wie die erste Frequenz.

3. Verfahren nach Anspruch 1 oder 2, wobei das Versorgungskabel (3) mit einer Verteilungseinheit (5) an dem Ort unter Wasser verbunden ist.

4. Verfahren nach Anspruch 1 oder 2, wobei das Versorgungskabel (3) mit einem Modul an dem Ort unter Wasser vor einer Verteilungseinheit (5) des Quellensystems verbunden ist.

5. Verfahren nach einem der vorhergehenden Ansprüche, wobei der Ort unter Wasser auf dem Grund eines das Versorgungskabel (3) umgebenden Gewässers liegt.

6. Verfahren nach einem der vorhergehenden Ansprüche, wobei der Detektionsschritt ein Überwachen der Spannung elektrischer Energie von dem Versorgungskabel (3) zur Verwendung bei der Erzeugung einer Anzeige umfasst, dass das Versorgungskabel (3) durch das Eindringen von Wasser beeinträchtigt wurde, wenn die Spannung niedriger ist als eine Schwelle.

7. Verfahren nach einem der vorhergehenden Ansprüche, welches die Schritte umfasst:
wenn detektiert wird, dass das Versorgungskabel (3) durch das Eindringen von Wasser beeinträchtigt wurde, Vorsehen eines Mittels (7) an dem Ort an der Oberfläche zum Umwandeln der elektrischen Energie von der Quelle (2) mit der ersten Frequenz in die elektrische Energie mit der zweiten Frequenz oder die elektrische GS-Energie; und
Vorsehen, an dem Ort unter Wasser, eines Mittels (8) zum Umwandeln der elektrischen Energie mit der zweiten Frequenz oder der elektrischen GS-Energie in elektrische Energie mit der Frequenz, die von der Unterwasserausrüstung des Quellensystems verwendet wird.

8. Verfahren nach einem der Ansprüche 1 bis 6, welches die Schritte umfasst:
wenn detektiert wird, dass das Versorgungskabel (3) durch das Eindringen von Wasser beeinträchtigt wurde, Veranlassen des ersten Wandlermittels (7) an dem Ort an der Oberfläche, die elektrische Energie von der Quelle (2) mit der ersten Frequenz in die elektrische Energie mit der zweiten Frequenz oder die elektrische GS-Energie umzuwandeln; und
Veranlassen des zweiten Wandlermittels (8) an dem Ort unter Wasser, die elektrische Energie mit der zweiten Frequenz oder die elektrische GS-Energie in elektrische Energie mit der Frequenz umzuwandeln, die von der Unterwasserausrüstung des Quellensystems verwendet wird.

9. Unterwasser-Fluidextraktionsquellensystem, umfassend:
eine Quelle (2) elektrischer Energie mit einer ersten Frequenz an einem Ort an der Oberfläche;
ein Versorgungskabel (3) zum Senden von elektrischer Energie von der Quelle (2) über einen elektrischen Leiter des Versorgungskabels (3) an einen Ort unter Wasser zur Verwendung durch die Unterwasserausrüstung des Quellensystems;
und
**gekennzeichnet durch** ein Mittel (9) zum Detektieren, dass das Versorgungskabel (3) **durch** das Eindringen von Wasser beeinträchtigt wurde, wobei das System ferner umfasst:
ein erstes Wandlermittel (7) zur Verwendung an dem Ort an der Oberfläche zum Umwandeln von elektrischer Energie von der Quelle (2) in elektrische Energie mit der zweiten Frequenz, die niedriger ist als die erste Frequenz, oder in die elektrische GS-Energie; und
ein zweites Wandlermittel (8) zur Verwendung an dem Ort unter Wasser zum Umwandeln solcher elektrischer Energie mit der zweiten Frequenz oder der elektrischen GS-Energie in elektrische Energie mit einer Frequenz, die von der Unterwasserausrüstung des Quellensystems verwendet wird, so dass, wenn das Detektionsmittel (9) anzeigt, dass das Versorgungskabel (3) **durch** das Eindringen von Wasser beeinträchtigt ist, das erste Wandlermittel (7) verwendet werden kann, um elektrische Energie von der Quelle (2) in die zweite Frequenz oder in GS umzuwandeln, zur Übertragung über den Leiter an den Ort unter Wasser, und das zweite Wandlermittel (8) verwendet werden kann, um die elektrische Energie mit der zweiten Frequenz oder die elektrische GS-Energie in elektrische Energie mit der Frequenz umzuwandeln, die von der Unterwasserausrüstung des Systems verwendet wird.

10. System nach Anspruch 9, wobei das Detektionsmittel (9) ein Mittel zum Überwachen der Spannung elektrischer Energie von dem Versorgungskabel (3) umfasst, zur Verwendung bei der Erzeugung einer Anzeige, dass das Versorgungskabel durch das Eindringen von Wasser beeinträchtigt ist, wenn die Spannung niedriger ist als eine Schwelle.

## Revendications

1. Procédé d'utilisation d'un cordon ombilical (3) entre un emplacement de surface et un emplacement sous-marin d'un système de puits d'extraction de fluide sous-marin, le cordon ombilical (3) portant un conducteur d'énergie électrique pour transmettre à l'emplacement sous-marin de l'énergie électrique provenant d'une source (2) à l'emplacement de surface à une première fréquence, pour utilisation par un équipement sous-marin du système de puits, le procédé étant **caractérisé par** les étapes consistant à :
détecter que le cordon ombilical (3) a été fragilisé par l'entrée d'eau et, en réponse à cette situation :
convertir l'énergie électrique de la source (2) en énergie électrique à une seconde fréquence inférieure à la première fréquence ou en énergie électrique CC ;
transmettre ladite énergie électrique à la seconde fréquence ou ladite énergie électrique CC à l'emplacement sous-marin via le conducteur ; et,
à l'emplacement sous-marin, convertir ladite énergie électrique à la seconde fréquence ou ladite énergie électrique CC en énergie électrique à une fréquence utilisée par l'équipement sous-marin du système de puits.

2. Procédé selon la revendication 1, dans lequel la fréquence de l'énergie électrique utilisée par l'équipement sous-marin du système de puits est la même que la première fréquence.

3. Procédé selon la revendication 1 ou 2, dans lequel le cordon ombilical (3) est connecté à une unité de distribution (5) à l'emplacement sous-marin.

4. Procédé selon la revendication 1 ou 2, dans lequel le cordon ombilical (3) est connecté à un module à l'emplacement sous-marin avant une unité de distribution (5) du système de puits.

5. Procédé selon l'une quelconque des revendications précédentes, dans lequel l'emplacement sous-marin se trouve sur le lit d'une masse d'eau entourant le cordon ombilical (3).

6. Procédé selon l'une quelconque des revendications précédentes, dans lequel ladite étape de détection comprend la surveillance de la tension de l'énergie électrique provenant du cordon ombilical (3) pour utilisation dans la production d'une indication que le cordon ombilical (3) a été fragilisé par l'entrée d'eau si la tension est inférieure à un seuil.

7. Procédé selon l'une quelconque des revendications précédentes, qui comprend les étapes consistant à :
si l'on détecte que le cordon ombilical (3) a été fragilisé par l'entrée d'eau, fournir des moyens (7) à l'emplacement de surface pour convertir ladite énergie électrique de la source (2) à la première fréquence en ladite énergie électrique à la seconde fréquence ou en ladite énergie électrique CC ; et
fournir à l'emplacement sous-marin des moyens (8) pour convertir l'énergie électrique à la seconde fréquence ou ladite énergie électrique CC en énergie électrique à ladite fréquence utilisée par l'équipement sous-marin du système de puits.

8. Procédé selon l'une quelconque des revendications 1 à 6, qui comprend les étapes consistant à :
si l'on détecte que le cordon ombilical (3) a été fragilisé par l'entrée d'eau, amener lesdits premiers moyens de conversion (7), à l'emplacement de surface, à convertir ladite énergie électrique de la source (2) à la première fréquence en ladite énergie électrique à la seconde fréquence ou en ladite énergie électrique CC; et
amener lesdits seconds moyens de conversion (8), à l'emplacement sous-marin, à convertir l'énergie électrique à la seconde fréquence ou ladite énergie électrique CC en énergie électrique à ladite fréquence utilisée par l'équipement sous-marin du système de puits.

9. Système de puits d'extraction de fluide sous-marin, comprenant :
une source (2) d'énergie électrique à la première fréquence à un emplacement sous-marin ;
un cordon ombilical (3) pour transmettre de l'énergie électrique de la source (2) via un conducteur électrique du cordon ombilical (3) à un emplacement sous-marin pour utilisation par l'équipement sous-marin du système de puits ; et
**caractérisé par** des moyens (9) pour détecter que le cordon ombilical (3) a été fragilisé par l'entrée d'eau, dans lequel le système comprend en outre :
des premiers moyens de conversion (7) pour utilisation à l'emplacement de surface afin de convertir de l'énergie électrique de la source (2) en énergie électrique à une seconde fréquence inférieure à la première fréquence ou en énergie électrique CC ; et
des seconds moyens de conversion (8) pour utilisation à l'emplacement sous-marin afin de convertir cette énergie électrique à la seconde fréquence ou ladite énergie électrique CC en énergie électrique à une fréquence utilisée par ledit équipement sous-marin du système de puits de sorte que, si lesdits moyens de détection (9) indiquent que le cordon ombilical (3) est fragilisé par l'entrée d'eau,
lesdits premiers moyens de conversion (7) puissent être utilisés pour convertir de l'énergie électrique de la source (2) à ladite seconde fréquence ou en énergie CC pour transmission via ledit conducteur à l'emplacement sous-marin, et que lesdits seconds moyens de conversion (8) puissent être utilisés pour convertir l'énergie électrique à la seconde fréquence ou l'énergie électrique CC en énergie électrique à la fréquence utilisée par ledit équipement sous-marin du système.

10. Système selon la revendication 9, dans lequel lesdits moyens de détection (9) comprennent des moyens pour surveiller la tension de l'énergie électrique venant du cordon ombilical (3) pour utilisation dans la production d'une indication que le cordon ombilical est fragilisé par l'entrée d'eau si la tension est inférieure à un seuil.
